# EUROPEAN PATENT APPLICATION

(11) **EP 4 737 908 A2**
(43) Date of publication of application: **06.05.2026**
(21) Application number: 26155223.6
(22) Date of filing: 22.12.2023
(51) Int. Cl.: G01N 35/04

(54) **MICROPLATE PROCESSING APPARATUS AND LID PLACEMENT METHOD USING THE APPARATUS**

(62) Divisional of application: 23219927.3
(71) Applicant: TECAN Trading AG, 8708 Männedorf (CH)
(72) Inventor: LAMPRECHT, Marcel, 8635 Dürnten (CH); BAUER, Christina, 8005 Zürich (CH); TANASESCU, Paul-Alexandru, 8708 Männedorf (CH); REMUND, Michael, 8926 Kappel a.A. (CH); GIGER, Jannik, 8635 Dürnten (CH); BECK, Kei, 8708 Männedorf (CH)
(74) Representative: Troesch Scheidegger Werner AG

(57) **Abstract**

A laboratory automation apparatus comprising a working table, a first component having a defined shape, a second component for covering the top surface of the first component with a rim adapted to surround the first component. A transfer mechanism with a gripper configured to grip and place the second component to different positions on the working table and a microcontroller for controlling the transfer mechanism. The apparatus is configured to place the second component onto the first component where the centers (C', C) of both components are misaligned such that a part of the rim of the second component touches the top surface of the first component. The apparatus is configured to move the second component in the x-y plane on, or across the top surface thereby self-aligning the centers such that the rim of the second component surrounds the first component.

## Description

### FIELD OF THE INVENTION

The current invention relates to a microplate processing apparatus configured place lids onto the microplate, and to a method for self-centering a lid onto the microplate using the microplate processing apparatus.

### BACKGROUND OF THE INVENTION

Laboratory automation apparatuses are used for automation tasks of a laboratory assistant. In the field of diagnostics such laboratory automation apparatuses are used for testing test samples from a patient for detecting specific diseases. A sample of the patient's blood, stool or urine is taken and analyzed by means of a biochemical procedure. In the field of pharmaceutical research, laboratory automation apparatuses are used for screening libraries of thousands new chemical or biological entities and their response to specific receptors also requiring highly automated equipment and testing procedures. High throughput of a plurality of test samples, for example during the Covid pandemic, requires highly automated laboratory apparatuses.

The sample testing uses standardized well-plates or microplates which include a plurality of wells or containers arranged in multiple arrays. There are numerous types of microplates with different shapes of the wells, such as round or flat wells, different number of wells or deep wells. Microplates preferably have standardized dimensions for the rectangular footprint according to ANSI standards. The height of the microplates can vary significantly depending on the specific intended application within the laboratory automation procedure. The laboratory automation apparatus includes, for example, automated pipetting lines, mixing tables, incubators, or automated microplate readers for measuring the specific absorption, luminescence, or phosphorescence of the substances to be tested within the microplates. The microplates are preferably placed onto a working table within the laboratory automation apparatus and may be moved between different stations for filling, incubating, tempering, and testing of the samples within the wells of the microplate using for example a microplate reader.

The analytical testing procedures are often performed over a prolonged period and/or at temperatures above room temperatures and this may lead to evaporation of the fluids present in the wells of the microplate. Drying of the samples or concentration of reactants should be avoided and the microplates are therefore covered by a lid. The lid may further reduce the risk of cross contamination due the mixing and condensation of evaporated fluids between the wells in the microplate. The rectangular lids therefore cover and enclose the top rim of the rectangular microplates with a tight clearance. The lids need to be placed and removed on the microplates during the fluid handling and testing of the substances requiring a robotic handling system within the laboratory automation apparatus. The placement and removal of the lids must be fast and reliable to prevent misplacement of the lid on the top surface of the microplate. A tilted microplate may, for example, prevent or obstruct insertion of the assembly of the covered microplate into a microplate reader. This will stall a long-term testing procedure on the automated apparatus and lead to a significant delay for obtaining test results and loss of expensive reactants used.

A rectangular microplate located on a working table may need to be covered by a rectangular lid using the robotic handling system including the transfer mechanism equipped with a gripper. The transfer mechanism carrying the lid moves to the location of microplate, lowers the lid and opens the grippers for covering the microplate. The rectangular lid includes rim protruding from and surrounding the outer dimensions of the microplate. There is a tight fit between the protruding rim of the microplate and the outer dimensions on the top surface of the rectangular microplate as there is a small clearance gap between the rim and the outer surface of the microplate.

Accurate positioning of the lid is required which may be jeopardized by the accuracy of the transfer mechanism and stacked-up tolerances of the working table, the position of a nest for the microplate, the outer dimensions of the microplate and the dimensions of the lid and the protruding rim. The stacked-up tolerances may be within the same order of magnitude as the clearance between the rim on the lid and the outer contour of the microplate mentioned above.

Extensive teaching procedures are required for accurately teaching the transfer mechanism for each position of the microplate on the working table for single step lid placement, i.e., the lid is moved to a position for covering the microplate and lowered for covering the microplate in a single step.

US 9029101 discloses a microplate reader with a lid lifter for placement and removal of the lids from a microplate that may be analyzed by the optical measuring or detecting device of the reader.

JP2014226569 discloses a lid body for placement on, and covering of, a microplate. The lid includes a rim surrounding the rectangular body and additional positioning parts protrude from the body surface. The lid placement requires non-standard lids and the additional positioning parts are configured to engage with well holes which are not available for testing purposes. The positioning parts have a rounded end surface facilitating the insertion and self-centering of the lid onto the well plate.

### DESCRIPTION OF THE INVENTION

Inaccurate lid placement may lead to dislodged or tilted lids on a microplate and may lead to repeated jamming or blockage when the covered microplate is attempted to be inserted into other labware equipment such as an incubator or a microplate reader.

It is an objective of the present invention to overcome the disadvantages of the prior art and provide reliable and robust microplate processing apparatuses and lid placement methods for handling of microplates and standard lids for covering the microplates. The apparatus and methods require less teaching and training for the microplate processing apparatus.

Those objectives are solved by the independent claims, further exemplary embodiments are evident from the dependent claims and the following description including the Figures.

A first aspect relates to a laboratory automation apparatus for placement, covering or stacking first and second components, preferably labware components.

The laboratory automation apparatus includes a working table with a working surface defining an x-y plane and a first component is positioned on the working table, the first component having a top surface preferably oriented parallel to the x-y plane with a defined geometrical shape. The x-y plane is part of a cartesian coordinate system and the z-axis is oriented perpendicular to the x-y plane. The top surface may be a flat, planar top surface. Alternatively, the top surface of the first component is provided by a top surface of a rim surrounding the first component. The first component is positioned on the working table such that the component cannot be shifted across the table in the x-y plane. The defined geometrical shape of the top surface may be selected from a square, a rectangle, a circle, an ellipse, a triangle, a hexagon or a combination thereof. The top surface is oriented parallel to the x-y plane. Alternatively, the top surface is tilted with respect to the x-y plane of the working table. The laboratory automation apparatus includes a second component for covering the top surface of the first component and having a bottom surface surrounded by a rim extending from the bottom surface and adapted to surround or engage the geometrical shape of the first component. The bottom surface is preferably a planar or flat surface The rim on the second component may surround the geometrical shape of the top surface of the first component. The rim surrounding the bottom surface provides a complementary geometrical shape for the geometrical shape of the top surface of the first component. The geometrical shape and the complementary geometrical shape are identical, for example a circular or rectangular top surface is surrounded by a complementary circular or rectangular shaped bottom surface of the second component. The complementary shape of the bottom surface is slightly oversized compared to the geometrical shape of the top surface such that the rim of the second component may fit around the top surface of the first component with a low clearance therebetween.

The laboratory automation apparatus further includes a robotic system with a transfer mechanism with a gripper configured to grip, transfer and release the first component or the second component to different positions on the working table. Alternatively, the gripper is configured to grip, transfer and release an assembly of the first component covered by a second component. A microcontroller controls the actions of the transfer mechanism.

The laboratory automation apparatus is configured to place the second component onto the first component such that the top surface and bottom surfaces are essentially parallel and, in a position, where the center of the bottom surface of the second component is misaligned with respect to the center of the top surface of the first component to a distance amounting to at least 0.5% of the longest dimension of the first component. The longest dimension may be the longest dimension of the defined geometrical shape of the top surface, for example the longest dimension of an ellipse or longest dimension of a rectangle. Alternatively, the centers are misaligned to a distance amounting to at least 1% or at least 2% of the longest dimension. At least a part of the bottom surface of the rim surrounding the bottom surface of the second component touches the top surface of the first component when the centers are misaligned. For example at least 30%, more preferably at least 40% or more preferably at least 50% of the bottom surface of the rim touches the top surface.

The laboratory automation apparatus is further configured to move the second component in the x-y plane translational across the top surface of the first component such that at least a part of the rim engages the outer contour or outer geometrical shape of the top surface of the first component thereby self-aligning the centers of the first and second components such that the rim may completely surround the outer geometrical shape of the first component, and the bottom surface of the second component fully covers the top surface of the first component. The movement may be a simultaneous movement in the x and y direction or a subsequent move first in the x-direction followed by a move in the y-direction or vice versa. Alternatively, only a move in the x-direction or a move in the y-direction is executed. During the translational move, the bottom surface of the rim of the second component touches the top surface of the first component and the top surface and the bottom surface remain essentially parallel to another.

The apparatus is configured to pick, move and place the second component from a position on the working surface, for example a parking position or a storage position where a plurality of second components are stored, to the position on top of the first component where the centers are misaligned. Subsequently, the laboratory automation apparatus is configured to provide the translational movement of the second component in the x-y plane such that the rim first surrounds at least a part of the geometrical shape or contour of the top surface of the first component, and this facilitates the self-positioning of the second component thereby fully covering the first component. The second component may move towards the first component when the centers are aligned, and the rim completely fits around the geometrical shape of the top surface. During or after the translational movement the second labware component may snap onto the outer contour of the first component. The first and second components may be different labware components or identical labware components. If the first and second components are identical components, then those components may be stacked. If the first and second components are different components, then assemblies of first and second components may be stacked.

The second component includes a rim surrounding and protruding from the bottom surface of the second component. Alternatively, an edge, a key, a groove, a protrusion, a plurality of protrusions, a skirt, a lip or a flexible arm are located on, and at least partially surround the bottom surface of the second component.

The placement of the second component is divided into two separate steps. In the first step the second component is lowered along the z-axis and placed onto the first component with deliberately misaligned centers and the coordinates on the x-y plane may not be well defined. In the second step, the translational move ensures that a part of the rim may fit first on a certain location around the top surface and the other part of the rim is still contacting the top surface. The part that fits provides guidance for the other part of the rim as the degree of freedom for movement of the second component is restricted due to the part of the rim fitting around or engaging the top surface of the first component. The rim is therefore used in the second step for self-centering the second component. The laboratory automation apparatus provides a reliable and robust placement of the second labware component onto the first labware component without requiring extensive machine learning or operator instructions for teaching a laboratory automation apparatus configured for single step placement. The two-step placement requires less accurate positioning of the second component during the first placement step and may require less training for the laboratory automation apparatus.

The laboratory automation apparatus may be configured to provide a force in the z-direction and bias the second component towards the first component during the placement of the first component onto the first component and during the translational move. The bias provided by the transfer mechanism ensures that the bottom surface of the second component may be lowered, or moved towards the top surface of the first component when the rim fits around the defined geometrical shape of the top surface of the first component.

The placement of the rim around the top surface ensures that the second component is non-shiftable in the x-y plane when placed on the first component and the rim together with the bottom surface of the second component may provide a tight fit with a low clearance between the two parts. The tight fit may prevent, for example, evaporation of fluid test samples present in the first component.

The translational move in the x-y plane provided by the laboratory automation apparatus may be selected from a move along a diagonal of the first component, a simultaneous move in the x-y plane not along the diagonal of the first component, a move in the x-direction followed by a move in the y-direction, a move in the y-direction followed by a move in the x-direction, a circular movement in the x-y plane or a rotational movement around the z-axis. Alternatively, only a move in the x-direction or a move in the y-direction is executed. The planar top surface of the first component remains essentially parallel to the planar bottom surface of the second component during the move. A diagonal move may be provided for a rectangular or square shaped first component.

The translational movement ensures that the second component or center of the bottom surface aligns itself with the defined outer geometrical shape or center of the top surface of the first component. For example a second component with a rim surrounding a rectangular shaped bottom surface may fit onto the rectangular top surface of the first component and either the rim on the long side of the bottom surface may first fit onto the long side of the top surface followed by a match on the short side of the top surface or, vice versa, the rim on the short side of the bottom surface may first fit around the short side of the top surface followed by a match on the long side. Alternatively, the rim may first fit on a corner of the top surface before engaging the other corners. This self-centering process requires less accurate positioning when placing the lid on top of the first component. The translational movement provides accurate positioning of the second component onto the first component due to a self-alignment of the rims fitting around the top surface.

The laboratory automation apparatus includes at least two gripping fingers for applying a gripping force onto an outer surface of the rim of the second component. The gripping fingers are preferably arranged to provide a first force in the z-direction when placing the second component onto the first component. The gripping force provided by the gripping fingers may be directed in the x-direction, and/or in the y-direction and/or in both the x and y direction. The first force provided in the z-direction may be applied to the second component independent from the gripping force. Alternatively, the gripper includes magnets for engaging magnets or a magnetizable material present on the second component for gripping and holding the second component. As another alternative, the gripper includes a suction cup for gripping or holding the second component. A form-grip gripper may also be used in that the gripper is in a form-fit engagement with the second component. The gripping fingers, magnets or suction cup may apply the gripping force on a rim of the second component or may apply a gripping force onto the top surface of the second component or to a combination of the rim and the top surface.

The force in the z-direction applied by the transfer mechanism may be a constant biasing force such that the force applied during the placement of the second component and during the translational move is identical. Alternatively, a first force is applied during the placement and a second force during the translational move. The first force may be higher compared to the second force. The force may be decreased to a second force during the translational movement. The force in the z-direction may be decreased stepwise or there is a gradual decrease. The gradual decrease may be a linear decrease or a non-linear decrease in force over time. The force may be decreased when a hard stop between the transfer mechanism or gripping fingers and the top surface is detected.

Decreasing the force during the translational movement may reduce friction between the top surface of the first component and the bottom surface of the rim of the second component or reduce a frictional force between the gripper touching the top surface during the translational movement. Decreasing the force in the z-direction may further reduce the mechanical load on the transfer mechanism or the electrical load for the electric motors present in the transfer mechanism.

In another embodiment, the first and/or second component of the laboratory automation apparatus are labware components selected from a holder for solid phase extraction columns, a microscope slide holder, a nest for holding labware components, trays for holding pipettes, boxes for holding tray holders, tray holders, microplates, well-plates, assay plates, covers or lids for covering labware, covers or lids for covering microplates, petri dishes or covers for petri dishes, or nests for holding microplates or petri dishes. The labware component may be integrated in an analytical measuring tool such as a microplate reader. The microplate reader may have a drawer (representing the labware component) for a microplate and the drawer with the microplate placed on it may be retracted into the reader for the analytical measurements. Handling a plurality of different labware components may provide a versatile automation apparatus.

A second aspect relates to a method for self-centering a second component onto a first component using the laboratory automation for placement, covering, or stacking labware components.

The method uses the laboratory automation apparatus including:
- the working table with a working surface defining an x-y plane,
- the first component positioned on the working table, the first component having a top surface oriented parallel to the x-y plane with a defined geometrical shape or outer contour,
- the second component for covering the top surface of the first component and having a bottom surface surrounded by a rim extending from the bottom surface and adapted to surround the defined geometrical shape of the first component; the top surface and the bottom surface are preferably flat, planar surfaces,
- the transfer mechanism including a gripper configured to grip, transfer or release the first component or the second component to different positions on the working table,
- a microcontroller for controlling the transfer mechanism,
wherein the method includes the following steps:
a) using the transfer mechanism for lowering the second component in the z-direction and placing the second component onto the top surface of the first component such that the bottom surface of the second component is oriented substantially parallel to the top surface of the first component and in a position where at least a part of the bottom surface of the rim touches the top surface of the first component.
b) using the transfer mechanism for applying a force in the z-direction on the second component to bias the second component towards the top surface of the first component,
c) moving the second component with respect to, and across the top surface of the first component in the x-y plane while retaining the bias until the rim surrounds the geometrical shape of the first component and the bottom surface of the second component fully covers the top surface of the first component. A part of the rim will first fit around a part of the geometrical shape of the first component and this first engagement facilitates that the other part of the rim snaps around the other part of the geometrical shape thereby enabling a self-centering of the second component during the movement across the top surface.

The movement in method step c) may be selected from a translational movement on, or across the top surface of the first component which may be a simultaneous movement in the x and y direction or a subsequent movement in the x and y direction, a circular or orbital movement in the x-y plane or a rotational movement around the z-axis. Alternatively, only a move in the x-direction or a move in the y-direction is executed. Splitting the lid placement into two movement steps a) and c) and a biasing step b) ensures that less accurate positioning of the second component is required in step a) compared to single step placement.

As an alternative, the first and second components may be reversed in the placement. The second component may be positioned on the working table with a complementary geometrical shape facing upwards and the first component with a defined geometrical shape may be lowered in the z-direction during step a) and the first component may be moved across the top surface in step c). The second component may be a collection bin for collecting washing fluids eluted through a solid phase extraction column present in a tray; the tray representing the first component. The second component may be the drawer for the microplate reader with a complementary geometrical shape, for example a rectangle surrounded by a rim facing upwards, and the first component may be a rectangular shaped microplate that can be placed onto the drawer using method steps a) to c).

The defined geometrical shape for the top surface of the first component may be selected from a square, a rectangle, a triangle, a circle, an oval, a trapezium, or a parallelogram. The shapes may be substantially rectangular or substantially square defined in that the shape is rectangular but, for example one or two corners of the rectangle may include a facet. The geometrical shape of the footprint for the first component for direct or indirect attachment to the working table may be different from the outer contour of the top surface of the first component configured to engage the second component. As an example, the first component may have a rectangular footprint for attachment to the working table whereas the top surface may have a circular outer contour for engaging a complementary circular inner contour surrounding a bottom surface of the second component.

According to an embodiment, the first and second components are labware components selected from a holder for solid phase extraction columns, a microscope slide holder, a nest for holding labware components, trays for holding pipettes, boxes for holding tray holders, microplates, well plates, petri dishes. Covers or lids for covering the labware components such as lids for microplates, lids for solid phase extraction columns, lids for tray holders or lids for petri dishes.

According to an embodiment, the center of the top surface of the first component is misaligned with respect to the center of the bottom surface of the second component when executing method step a). The center of the top surface of the first component may be misaligned with respect to the center of the bottom surface of the second component by a distance equal to at least 0.5% of the longest dimension of the first component, or alternatively the centers may be misaligned by a distance equal to at least 1% of the longest dimension of the first component. As another alternative the center may be misaligned by a distance equal to at least 2% of the longest dimension of the first component. The misalignment for the centers may equal in the x and y directions or the misalignment for the centers may be different in the x and y directions.

The deliberate shifting of the centers of the top surface of the first component and the bottom surface of the second component ensures that the rim of the second component touches the top surface of the first component in step a) before shifting the second component in step c). In step a) the rim surrounding the second component does not fit around the top surface of the first component and in step c) the second component self-aligns with the top surface of the first component.

According to an embodiment, the gripper has two gripping fingers applying a gripping force onto the outer surface of the second component and wherein the gripping fingers provide a first force in the z-direction for biasing the second component in the z-direction in step b). The gripping force is preferably applied in the x-direction or the y-direction whereas the biasing force is applied in the z-direction. The force applied in the z-direction by the gripping fingers may be lowered to a second force below the first force during step c). The gripping fingers may include gripping surfaces contacting the outer surface of the second component the gripping surfaces may slide over the outer surface of the second component during step b) until the gripping fingers contact the top surface of the first component. The detection of contact between the gripper and the top surface may be an indication for a hard stop and is signaled to the microcontroller and used to initiate step c). Alternatively, a form gripper with a form-fit engagement between the gripper and the second component may be used.

Lowering the biasing force lowers the friction between the second component and the first component and may prevent overloading of the electric motors in the transfer mechanism as the second component is shifted across the surface of the first component in step c). Furthermore, a low biasing force is required for fitting the rim of the second component onto or around the top surface of the first component.

According to an embodiment, the method is extended with step d); releasing the fingers of the gripper such that the gripper and the transfer mechanism is available for executing another operation. Method steps a) to d) of the self-centering method may be repeated for stacking first and second components. First and second components may be stacked in an alternating manner or, alternatively only first or second components are stacked. In another alternative assemblies of first components covered by second components are stacked on top of each other.

The transfer mechanism may include a robotic arm for lifting the first component and/or second component in a z-direction perpendicular to the working surface, or translating the first component and/or second component in the x-y plane parallel to the working surface.

A computer program for placing a second component onto a first component, the computer program when being executed by the microprocessor is adapted to execute the method steps a) to d). A computer readable medium in which the computer program is stored. The position of the robotic arm in the x-y plane when the second component has been placed by self-alignment onto the first component may be recorded and stored in the computer readable medium, for example in a storage unit. The computer program may use the data for the plurality of self-aligned placement steps of second components and apply an algorithm calculating the optimal position for placing the second component in a single step without the translational movement. The method for the laboratory automation apparatus may therefore include step e) calculating the optimal position in the x-y plane for placing the second component on the first component from a plurality of repetition steps a) to d) and use the optimal position for placing the second component onto the first component in a single step procedure without the translational movement.

A third aspect relates to a microplate processing apparatus for lid placement onto a microplate.

The microplate processing apparatus includes a working table with a working surface defining an x-y plane, a microplate releasably coupled to a fixed position on the working table, the microplate having a rectangular outer shape or contour or at least the top surface of the microplate has a substantially rectangular shaped outer contour. A fixed position is defined as a position where the microplate cannot be shifted in the x-y plane but may be lifted in the z-direction. The top surface is preferably oriented parallel to the working surface. The microplate processing apparatus further includes a substantially rectangular lid for covering the top surface of the microplate and the lid may include a rim adapted to surround at least a part of the outer surface or contour of the microplate. The rim may surround the rectangular shaped lid. The rim may protrude from a bottom surface of the lid intended to cover the microplate. The top surface of the microplate and the bottom surface of the lid are preferably planar or flat surface. A transfer mechanism including a gripper is configured to grip, transfer and release the microplate and/or the lid to different positions on the working table. The apparatus further includes a microcontroller for controlling the transfer mechanism and the microplate processing apparatus is configured to place the lid onto the microplate in a position where the center of the lid is misaligned with respect to the center of the microplate by a distance amounting to at least 0.5% of the longest dimension of the microplate such that at least a part of the rim, for example the bottom surface of the rim touches the top surface of the microplate. At least 30% of the bottom surface of the rim, preferably at least 40% of the bottom surface of the rim, preferably at least 50%, of the bottom surface of the rim touches the top surface of the microplate thereby providing a stable gliding engagement between the lid and the microplate. The center of the lid and microplates are defined by the respective centers of the rectangles and the longest dimension is defined by the longest side of the rectangle. The bottom surface and the top surface of the microplate are essentially parallel when placing the lid onto the microplate. After the placement of the lid onto the microplate, the processing apparatus is configured to provide a translational movement of the lid in the x-y plane such that the rim surrounds the top surface of the microplate and the lid fully covers the top surface of the microplate. The rectangular rim of the lid protruding towards the microplate touches the top surface of the microplate during placement and fits around the outer rectangular contour of the microplate after the translational movement. The lid may be lowered when the rim surrounds and fits around the microplate. During the translational movement, at least a part of the rim (for example a corner) first engages the rectangular contour or corner of the top surface of the microplate and this first engagement facilitates that the other part of the rim (for example the other corners) fit around the top surface of the microplate when the translational movement is completed such that the lid self-centers onto the microplate.

Placing the lid on top of the microplate followed by the translational movement provides for a versatile and simple microplate processing apparatus as less training and teaching is required for accurate lid positioning which may be required if the laboratory processing apparatus is configured to perform the lid placement in a single step. The rim surrounding the rectangular shaped bottom surface may fit onto the rectangular top surface of the microplate and either the rim on the long side of the lid may first fit onto the long side of the top surface followed by a match on the short side of the top surface or, vice versa, the rim on the short side of the bottom surface of the lid may first fit around the short side of the top surface followed by a match on the long side. This self-centering process requires less accurate positioning when initially placing the lid on top of the microplate. The translational movement provides accurate positioning of the lid onto the microplate due to a self-alignment of the rim fitting around the top surface.

The translational move in the x-y plane provided by the microplate processing apparatus may be selected from a movement along a diagonal of the rectangular shaped microplate, a simultaneous movement in the x and y direction that is not along the diagonal, a subsequent movement along the x-axis followed by a movement along the y-axis, a circular or orbital movement of the center of the lid with respect to the center of the microplate, or a rotational movement of the center of the lid around the z-axis.

According to an embodiment, the microplate processing apparatus is configured to provide a force in the z-direction and bias the lid towards the microplate during the translational move.

According to an embodiment of the invention the gripper of the microplate processing apparatus includes two gripping fingers for applying a gripping force onto the rim of the lid, and the gripper with the gripping fingers are arranged to apply a first force in the z-direction when placing the lid onto the microplate. The gripping force is preferably applied in the x-direction or y-direction either onto the short sides of the rectangle, or alternatively to the long sides of the rectangle. The magnitude of the gripping force may be adjusted to prevent dual pick-up of lids, e.g., when multiple lids are arranged in a stack and the gripper with the fingers attempts to pick a single lid on top but may pick two lids due to the flexibility of the rim surrounding the lids. The elastically deformed rim of the top lid may abut and hold the rim of the underlying lid. The force provided in the z-direction can be adjusted independent from the gripping force in the x direction or y direction.

The force in the z-direction provides that the lid is lowered when the rim fits around the top surface of the microplate.

According to an embodiment the force in the z-direction may be decreased to a second force during the translational movement. The decrease may be a stepwise decrease in force or a gradual decrease or a linear decrease versus time. The decrease in force may be initiated once a hard stop has been detected between the gripper and the top surface.

Lowering the forces may reduce elastic deformation of the cover during the translational movement and may reduce the friction between the top surface of the microplate and the lower rim surface of the lid. Lower friction reduces the risk of blocking the translational movement and reduces the risk of overheating the electric motors present in the transfer mechanism. The detection of contact between the gripper or gripping fingers and top surface when lowering the lid may be used to i) lower the biasing force in the z-direction, and/or ii) start the translational move.

A fourth aspect relates to a method for self-centering a lid on a microplate using the microplate processing apparatus, the microplate processing apparatus including:
- the working table with a working surface defining an x-y plane,
- the microplate positioned on the working table, the microplate having a rectangular top surface oriented parallel to the x-y plane, the microplate may be releasably coupled to the working table,
- the lid for covering the top surface of the microplate and having a rim extending from, and surrounding a rectangular bottom surface, the rim being adapted to surround the rectangular top surface of the microplate,
- the transfer mechanism includes a gripper configured to grip, transfer or release the microplate and/or the lid to different positions on the working table,
- the microcontroller for controlling the transfer mechanism,
wherein the method includes the following steps:
a) using the transfer mechanism for lowering the lid in the z-direction and placing the lid onto the top surface of the microplate in a position where at least a part of the rim, for example the bottom surface of the rim, touches the top surface of the microplate and wherein the top surface of the microplate and the bottom surface of the lid are oriented essentially parallel to another. At least 30%, preferably at least 40% more preferably at least 50% of the bottom surface of the rim may touch the top surface of the microplate.
b) using the transfer mechanism to apply a force in the z-direction to bias the lid towards the top surface of the microplate,
c) moving the lid with respect to, and across the top surface of the microplate in the x-y plane while retaining the bias until the rim fits around the rectangular top surface of the microplate and the bottom surface of the lid fully covers the top surface of the microplate. The microplate may be lowered due to the bias provided in the z-direction as the rim fits around the microplate. Moving the lid across the surface ensures that the rim first engages the contour of the top surface of the microplate followed by an alignment of the center of the lid and the center of the microplate.

The movement in step c) of the method is selected from a translational movement in the x-y plane along a diagonal of the microplate, a simultaneous movement in the x and y direction, a subsequent movement in the x direction followed by a movement in the y direction, a subsequent movement in the y direction followed by a movement in the x direction, a circular or orbital movement in the x-y plane or a rotational movement around the z-axis.

In an embodiment of the self-centering method, the center of the rectangular top surface of the microplate is misaligned with respect to the center of the rectangular bottom surface of the lid when executing step a). The microplate may include wells protruding from the top surface of the microplate and the center of the bottom surface of the lid is misaligned with respect to the center of the top surface of the microplate when executing step a) such that the rim does not cover the wells.

In an embodiment, the center of the lid is misaligned with respect to the center of the microplate when executing step a) by a distance equal to at least 0.5% of the longest dimension of the microplate, for example at least 0.5% of the long side of the rectangular footprint of the microplate. Alternatively, the center of the lid is misaligned with respect to the center of the microplate by a distance equal to at least 1% or at least 2% of the longest dimension of the microplate. The misalignment for the centers may be equal in the x and y directions or the misalignment for the centers may be different in the x and y directions.

In an embodiment of the method, the gripper has at least two gripping fingers applying a gripping force onto the rim of the lid and wherein the gripping fingers provide a first force in the z-direction for biasing the lid in the z-direction in step b). The gripping force is applied in the x-direction or the y direction. The gripping force is preferably applied to the short sides of the rectangular shaped lid. Alternatively, the gripping force is applied to the rim on the long sides of the rectangular shaped lid. The first force in the z-direction provided by the gripper can be independently adjusted from the gripping force applied by the fingers in the x or y direction.

The force applied in the z-direction by the gripping fingers may be lowered to a second force below the first force during step c). Lowering the force may reduce the risk of damage to the transfer mechanism, for example the electric motors, or damage to the top surface of the microplate when moving the lid across the top surface of the microplate.

The gripping fingers include gripping surfaces contacting the outer surface of the rim and the gripping surfaces may slide over the outer surface of the rim during step b) towards the microplate until the gripping arms contact the top surface of the well plate. The contact in step b) may be detected as a hard stop and sent to the microcontroller and used for decreasing the force in the z direction and/or start method step c).

In an embodiment, the method for self-centering a lid further includes step d); releasing the gripper from the outer surface of the lid. The grippers may be retracted in the z-direction by the transfer mechanism leaving the microplate on the working table covered by the lid. The grippers are available for other transfer operations within the microplate processing apparatus.

The microplate may be positioned on a nest for holding the microplate in a fixed position in the x-y plane, e.g., the microplate may not be shifted in the x-y plane but may be lifted in the z-direction. The nest may be releasably fixated to the working table on a specific position. The microplate may be positioned onto the nest such that the microplate is in a form fit engagement in the x-y plane but can be removed from the nest along the z-axis. The grippers may grip the microplate itself and lift the microplate and transfer the microplate to another position or working station (for example a microplate reader, a mixing table or an incubator) on the working table.

Repeating steps a) to d), and removing and repositioning of a covered microplate to another position may be used to stack multiple assemblies of covered microplates on top of each other. Repeating steps a) to d) may be used to stack multiple microplates on top of each other or to stack multiple lids on top of each other. The transfer mechanism for the method for self-centering a lid may include the robotic arm for lifting the microplate and/or lid in the z-direction perpendicular to the working surface, or translating the microplate and /or lid in the x-y plane parallel to the working surface for executing steps a) to d).

The transfer mechanism includes a robotic arm for lifting the microplate and/or lid in a z-direction perpendicular to the working surface, or translating the microplate and /or lid in the x-y plane parallel to the working surface.

A computer program for placing a lid onto a microplate, the computer program when being executed by the microprocessor is adapted to execute the method steps a) to d). A computer readable medium in which the computer program is stored. The data from a plurality of repetitions of steps a) to d) may be used for teaching the microplate processing apparatus for single step placement. The position for the lid placements in the x-y plane after self-alignment step c) may be recorded and stored in a storage unit of the computer readable medium and an algorithm may be applied defining the optimum position for single step lid placement. The method for lid placement may further include step e) calculating the optimal position in the x-y plane for placing the lid onto the microplate from a plurality of repetition steps a) to d) and use the optimal position for placing the lid onto the microplate in a single step procedure without the translational movement.

These and other aspects of the invention will be apparent from and elucidated with reference to the embodiments described hereafter.

### BRIEF DESCRIPTION OF THE DRAWINGS

Embodiments of the present invention are described in more detail with reference to the attached drawings presenting:
- Figure 1:: Perspective view of the microplate processing apparatus,
- Figure 2:: A schematic representation of the microplate processing apparatus of Figure 1; presented is a lateral view on the x-z plane,
- Figure 3:: A schematic representation of the microplate processing apparatus of Figure 1; presented is a top view on the x-y plane,
- Figure 4:: A schematic representation of the microplate processing apparatus of Figure 1; the fingers of the gripper of the transfer mechanism holding the lid,
- Figure 5:: A schematic representation of the microplate processing apparatus of Figure 1; the gripper of the transfer mechanism has transferred the lid onto the top surface of the microplate,
- Figure 6:: Top view for the lid placement onto the microplate presenting the misalignment of the centers C, C',
- Figure 7:: Top view for the lid placement onto the microplate after the translational movement across the top surface of the microplate,
- Figure 8:: Lateral view on the x-z plane presenting the lid placement onto the top surface of the microplate with the biasing force F applied to the lid along the z-axis; translational move indicated by the arrow in the y direction.
- Figure 9:: Lateral view on the x-z plane presenting the lid placement after the translational movement,
- Figure 10:: Top view for the lid placement onto microplate with 96 wells, the rim of the lid touches the top surface of the microplate,
- Figure 11:: Top view after translational movement of the lid,
- Figure 12:: Top view for alternative labware components having different outer geometrical shapes,
- Figure 13:: Block diagram showing the different steps for the method for self-centering a lid on a microplate using the microplate processing apparatus.

### DETAILED DESCRIPTION OF EXEMPLARY EMBODIMENTS

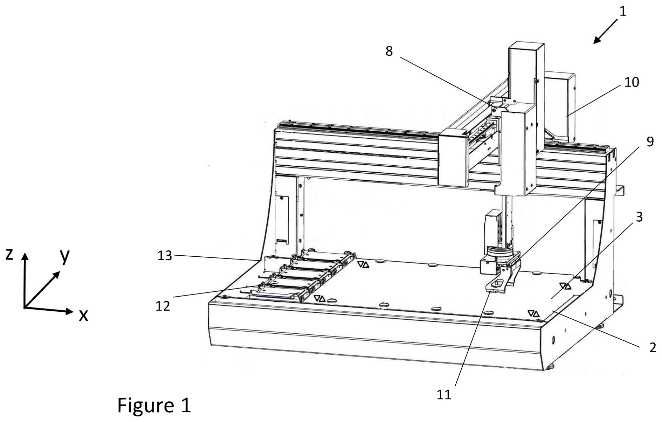

A perspective view of a microplate processing apparatus 1 is presented in Figure 1. A cartesian coordinate system indicates the directions of the x, y and z axis. A working table 2 is mounted on a frame 13. The working table 2 includes a working surface 3 extending along the x-y plane. The working surface 3 is available for placing or fixating a plurality of labware components such as, for example, mixing tools, incubators, sample holders, microplates and analytical measuring apparatuses such as, for example, a microplate reader. Nests 12 are fixated on the working table 2, each positioned on a specific location on the working surface 3. A microplate may be positioned onto the nest 12 such that the microplate is non-shiftable in the x-y plane while still being able to be removed from the nest 12 along the z-axis. The microplate is in a form-fit engagement with the nest 12 in the x-y plane. A transfer mechanism 8 is coupled to the frame 13 and the transfer mechanism 8 includes a gripper 9 for gripping, lifting, moving, releasing and placing labware components on the working table 2 to designated stations for performing automated laboratory tasks or for performing analytical measurements. The gripper 9 is part of a robotic arm that can be driven in the x, y and z directions, for example using motor driven spindle drives or belt drives. Optionally, the gripper can rotate around the z-axis. The electric motors used may be a step motor using encoders for defining and controlling the position of the gripper 9. A microcontroller 10 controls the movements of the gripper 9 and the microplate processing apparatus may be part of a system including a computer with a computer readable medium for storing a computer program. The computer program may be programmed and adjusted using a user interface for programming and controlling the actions of the gripper and/or labware components present on the working table. The microcontroller is configured to control the force applied by the gripper 9 in the x, y or z-direction. The gripper 9 includes two fingers 11 and the distance between the fingers may be adjusted for gripping, holding or releasing labware components. The gripping force applied by the fingers 11 on the labware components can be controlled by the microcontroller and programmed using the computer program.

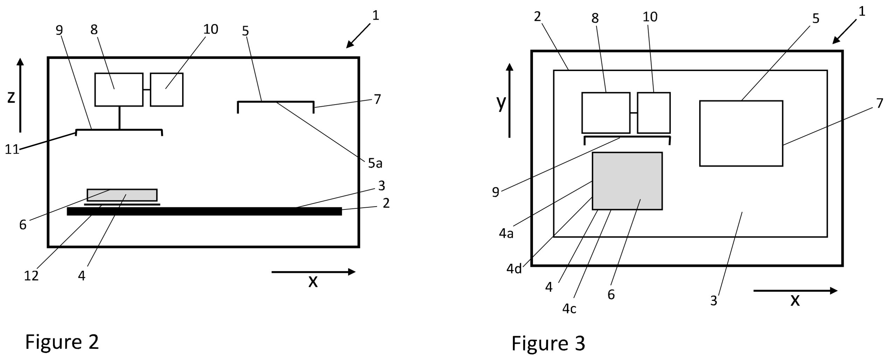

A schematic representation of the microplate processing apparatus 1 of Figure 1 is presented in Figure 2 as a lateral view on the x-z plane. The nest 12 is fixated onto the working surface 3 of the working table 2. A microplate 4 is positioned on the nest 12 such that the microplate 4 can move in the z-direction but cannot move in the x-y plane. The microplate 4 has a rectangular footprint that fits in a corresponding rectangular recess of the nest 12. Optionally, the microplate 4 may be releasable fixated to the nest 4 such that movements along the z-axis are prevented. The fixation of the nest 12 to the working table 2 and the optional fixation between the nest 12 and the microplate 4 may be configured to be released by a laboratory technician or by the gripper 9 of the transfer mechanism 8. A rectangular lid 5 includes a rim 7 surrounding a bottom surface 5a that is configured to cover a top surface 6 of the microplate 4. The rim 7 of the rectangular lid 5 protrudes from and surrounds the rectangular bottom surface 5a. The gripper 9 may be moved to the location of the lid 5 or a stack of lids using the transfer mechanism 8 controlled by the microcontroller 10.

A schematic representation of a top view on the x-y plane for the microplate processing apparatus 1 of Figure 1 is presented in Figure 3. The rectangular shaped microplate 4 includes the top surface 6 and the size is defined by a side with a short dimension 4d and a side with a long dimension 4c. The sides 4c, 4d provide the outer surface 4a surrounding the top surface 6. The lid 5 with rim 7 is positioned at a different location on the working table 2 and may be moved by the transfer mechanism 8 and gripper 9 onto the microplate 4.

The transfer mechanism may grip, hold and move the lid 5 in a single step onto the microplate 4 such that the rectangular rim 7 directly fits around the outer surface 4a. This represents a laboratory automation apparatus according to the prior art and requires extensive machine learning as the stacked up dimensional tolerances for the lid 5, the tolerances for the dimensions for the microplate 4, the dimensional tolerances for the nest 12 and its position on the working table 2 and the accuracy of the transfer mechanism 8 may be different for each position on the working table 2.

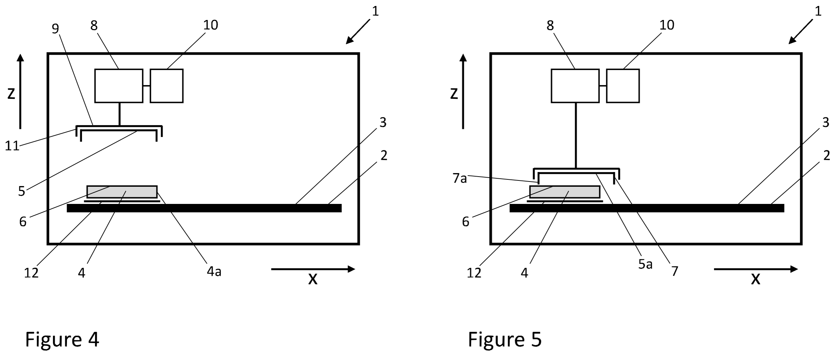

The transfer mechanism 8 may position the lid onto the microplate in 2 steps as will be explained in Figures 4 to 8.

A schematic representation of the microplate processing apparatus 1 of Figure 1 is presented in Figure 4 as a lateral view on the x-z plane, the gripper 9 has picked up a lid 5 from the position presented in Figure 2 using fingers 11. Fingers 11 can apply a gripping force on the outside surface of the rim of lid 5 when the distance between the two fingers is reduced along the y-axis. The gripper 9 includes a robotic arm for transferring the lid 5 from the position presented in Figure 2 to the position presented in Figure 4. The top surface 6 of the microplate 4 is a flat surface oriented parallel to the working surface 3. The lid 5 is oriented parallel to the top surface 6 of the microplate. The microplate 5 is moved along the z-axis to the position presented in Figure 5 until a bottom surface 7a of the rim 7 touches the top surface 6 of the microplate 4. The top surface 6 of the microplate 4 and the bottom surface 5a of the lid remain oriented parallel to another. The rectangular lid 5 has been positioned on top of the microplate such that the bottom surface 7a of the rim touches the top surface 6 but the rim 7 does not surround the outer surface 4a of the microplate. The transfer mechanism 8 applies a force in the z- direction when placing the lid 5 onto the top surface of the microplate 4. The fingers 11 may slide in the z-direction across the outer surface of the rim 7 once the rim of the lid touches the top surface. The force in the z-direction is decreased once the gripping fingers touch the top surface of the microplate.

The transfer mechanism 8 includes a vertical slide that can move along the z-axis for lowering or raising the gripper 9 with the gripping fingers 11. The vertical slide is driven by a belt drive and the belt is driven by an electric motor, for example a stepper motor equipped with an encoder for detecting the number of revolutions of the motor axle which can be converted into the position of the vertical slide and gripper. The vertical slide may include a separate positioning sensor or encoder that is not directly linked to the electric motor, for example a magnetic sensor system for detecting the actual position of the vertical slide.

The firmware of the microcontroller calculates the time, speed and acceleration required for moving the gripper from position where the gripper is above the microplate to a position where the lid is position onto the top surface of the microplate. The microcontroller 10 detects the actual position of the gripper at microsecond intervals and compares the actual position with the theoretical position according to the calculated profile. If the delta between the actual and theoretical position increases, more current is directed to the electric motor for accelerating the driving the belt and vertical slide, if the delta between the actual and theoretical position decreases, less current is directed to the electric motor by the microcontroller for decelerating the vertical slide.

A hard stop is detected if the gripping fingers touch the top surface of the microplate and the delta between the actual position of the gripper and the theoretical position increases to a maximum level. If a predefined maximum level is reached, then this is a signal that a hard stop is detected and the microcontroller sets the current directed to the electric motor to a constant and lower level for applying a lower contact force for the gripping fingers contacting the top surface of the microplate. Lowering the current prevents overloading of the electric motor.

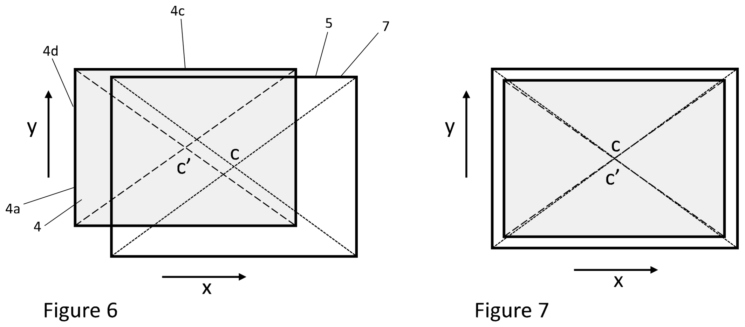

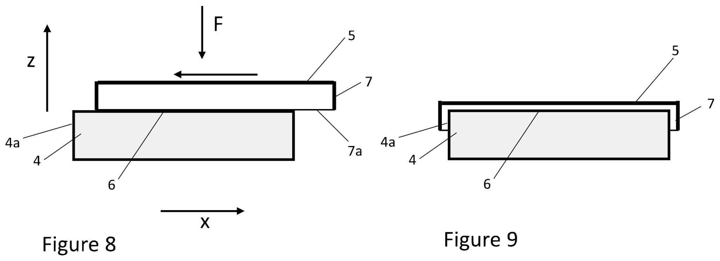

The transfer mechanism 8 translates the gripper 9 holding the rectangular lid 5 in the x-y plane after positioning onto the top surface of the microplate, for example after detection of the hard stop. The translational move in the x-y plane is schematically illustrated in Figures 6 and 7 (top view) and Figures 8 and 9 (lateral view). The diagonals of the rectangular lid 5 and the rectangular top surface of the microplate 4 are indicated as dotted lines. The center C for the rectangular lid 7 is shifted compared to the center C' of the top surface of the microplate 4 (see for example Figure 6). The shift of the centers is a so-called misalignment for the centers (C', C) of the top surface of the microplate and the bottom surface of the rectangular lid. The misalignment is a deliberate misalignment with a shift in the x-y plane that is above the stacked-up system tolerance for the microplate, the positioning of the microplate on the working table and the transfer mechanism including the gripper. The misalignment for the centers (C', C) presented in Figure 6 in the y direction is greater than the misalignment in the x-direction. The misalignment may be expressed as a fraction of the longest dimension 4c or shortest dimension 4d of the microplate. As an illustrative example a 96-well microplate is used with a longest dimension of 127.71 mm according to ANSI standards. A shift of 0.5 mm represents 0.39%, a shift of 1 mm represents 0.78% of the longest dimension. A shift of 3 mm represents 2.34 % of the longest dimension and a shift of 5 mm represents 3.91% of the longest dimension of the microplate.

The lid 5 is shifted in the x-y plane in the x and y direction such that the rim fits around the top surface 6 of the microplate. Comparing Figures 6 and 6 then there are several options for the shifting; the lid may be simultaneously moved in both the x and y direction, or the lid ma be shifted first in the x-direction and once the rims matching with the long side 4c fit on the top surface, than a subsequent shift in the y direction ensures that all rims effectively fit around the top surface of the microplate; alternatively, a simultaneous shift along the diagonal may be used for self-centering the lid. The centers C, C' are aligned once the rim of the lid surrounds the top surface of the microplate (see Figure 7).

The lid placement is illustrated in a lateral view in Figures 8 and 9. The force applied by the gripper in the z-direction for biasing the lid 5 towards the microplate 4 is indicated with an arrow F The lower surface 7a of the rim 7 for the lid 5 partially touches the top surface 6 of the microplate 4 after placing the lid with deliberately misaligned centers C, C'. The translational move is indicated in Figure 8 with an arrow parallel to the y-axis. The top surface 6 and the surface of the lid, or the bottom surface of the lid are coplanar and the engagement between the bottom surface of the rim and the top surface of the microplate provide for a stable gliding platform. Once the lid 7 has been shifted, the rim 7 is lowered by the biasing force as the rim surrounds the top surface of the microplate (Figure 9).

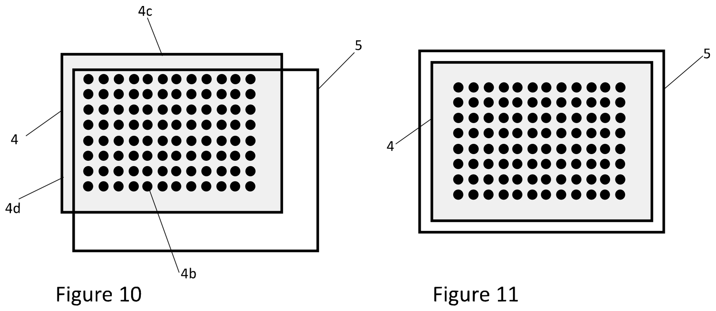

An example for a self-aligned lid placement by the microplate processing apparatus is depicted in Figures 10 and 11, respectively. The microplate is a 96-well plate and each well is represented as a black dot. Each protrudes into the well plate from the top surface and each well is surrounded by the top surface. In the example presented in Figure 10, the lid has been placed first on top of the 96-well plate such that none of the wells is covered by the rim of the lid. A translational shift ensures that the rim of the lid self-aligns with the outer contour of the top surface of the microplate (see Figure 11).

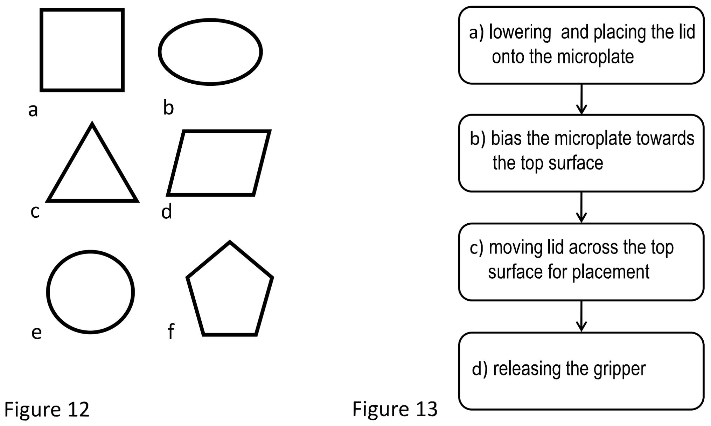

Alternative shapes for the microplate or for a labware component with a a top surface having a defined outer shape are presented in Figure 12 as a rectangle (a), an ellipse (b), a triangle (c), a parallelogram (d), a circle (e) or a pentagon (f). The corresponding lids have a rim surrounding a bottom surface with a complementary shape.

A method for self-centering a lid on a microplate using the microplate processing apparatus presented in Figures 1 to 12 is schematically presented in the block diagram of Figure 13. In method step a), the lid is lowered by the transfer mechanism and placed onto the top surface of the microplate such that the bottom surface of the rim touches the top surface of the microplate and the centers for the lid and the microplate are misaligned. In method step b) a force is applied in the z-direction for biasing the lid towards the microplate. In step c) the lid is moved across the top surface of the microplate until the rim fits around the top surface of the microplate. Optionally step d) is part of the method where the gripper is opened for releasing the lid from the gripper and leaving the lid covered microplate on the working table of the microplate processing apparatus.

The coordinates for self-aligned positioning of the lids from a plurality of positioning steps c) may be collected in a storage unit of the microprocessor and used for calculating the optimum coordinates for single step positioning along the z-axis without the translational movement in the x-y plane whereby the lid is shifted across the top surface of the microplate.

The method is equally applicable to the laboratory automation apparatus for handling a wide variety of labware components. Method steps for the laboratory automation apparatus may be combined with the method steps for the microplate processing apparatus.

### LIST OF REFERENCE SIGNS

- 1: Microplate processing apparatus
- 2: Working table
- 3: Working surface
- 4: Microplate
- 4a: Outer surface
- 4b: Wells
- 4c: Long dimension / side
- 4d: Short dimension / side
- 5: Rectangular lid
- 5a: Bottom surface
- 6: Top surface
- 7: Rim
- 7a: Bottom surface rim
- 8: Transfer mechanism
- 9: Gripper
- 10: Microcontroller
- 11: Gripping fingers
- 12: Nest
- 13: Frame
- C: Center lid
- C': Center microplate

## Claims

1. A laboratory automation apparatus (1) comprising:
- a working table (2) with a working surface (3) defining an x-y plane,
- a first component (4) positioned on the working table, the first component having a top surface (6) oriented parallel to the x-y plane with a defined geometrical shape,
- a second component (5) for covering the top surface of the first component and having a bottom surface (7a) surrounded by a rim (7) extending from the bottom surface and adapted to surround the geometrical shape of the first component,
- a transfer mechanism (8) comprising a gripper (9) configured to grip, transfer and release the first component (4) or the second component (5) to different positions on the working table (2),
- a microcontroller (10) for controlling the transfer mechanism (8),
wherein the laboratory automation apparatus is configured to
- place the second component onto the first component such that the top surface (6) and bottom surface (7a) are substantially parallel and in a position where the center of the bottom surface of the second component (C) is misaligned with respect to the center of the top surface of the first component (C') to a distance amounting to at least 0.5% of the longest dimension of the first component such that at least a part of the bottom surface of the rim touches the top surface of the first component,
- move the second component in the x-y plane translational across the top surface of the first component thereby aligning the centers of the first and second components such that the rim surrounds the outer geometrical shape of the first component and the bottom surface of the second component fully covers the top surface of the first component.

2. The laboratory automation apparatus according to claim 1, wherein the laboratory automation apparatus is configured to bias the second component (5) towards the first component (4) during the translational move.

3. The laboratory automation apparatus according to claims 1 or 2, wherein the translational movement in the x-y plane is selected from a movement along a diagonal of the first component, a circular movement in the x-y plane or a rotational movement around the z-axis.

4. The laboratory automation apparatus according to any of the previous claims wherein the first and/or second components are labware components selected from a holder for solid phase extraction columns, a microscope slide holder, a nest for holding labware components, trays for holding pipettes, boxes for holding tray holders, microplates, covers or lids for covering labware, covers or lids for covering microplates, petri dishes or covers for petri dishes.

5. A method for self-centering a second component onto a first component using a laboratory automation apparatus (1), the laboratory automation apparatus comprising:
- a working table (2) with a working surface (3) defining an x-y plane,
- a first component (4) positioned on the working table, the first component having a top surface (6) oriented parallel to the x-y plane with a defined geometrical shape,
- a second component (5) for covering the top surface (6) of the first component (4) and having a bottom surface (7a) surrounded by a rim (7) extending from the bottom surface (7a) and adapted to surround the defined geometrical shape of the first component (4),
- a transfer mechanism (8) comprising a gripper (9) configured to grip, transfer or release the first component (4) or the second component (5) to different positions on the working table (2),
- a microcontroller (10) for controlling the transfer mechanism (8),
wherein the method comprises the following steps:
- a) using the transfer mechanism for lowering the second component in the z-direction and placing the second component onto the top surface of the first component such that the bottom surface of the second component is oriented substantially parallel to the top surface of the first component and in a position where at least a part of the bottom surface of the rim touches the top surface of the first component
- b) using the transfer mechanism for applying a force on the second component to bias the second component towards the top surface of the first component,
- c) moving the second component with respect to, and across the top surface of the first component in the x-y plane while retaining the bias until the rim surrounds the geometrical shape of the first component and the bottom surface of the second component fully covers the top surface of the first component.

6. The method according to claim 5, wherein the defined geometrical shape for the top surface of the first component is selected from a square, a rectangle, a triangle, a circle, an oval, a trapezium, or a parallelogram.

7. The method according to any of the previous claims wherein the first and/or second components (4,5) are labware components selected from a holder for solid phase extraction columns, a microscope slide holder, a nest for holding labware components, trays for holding pipettes, boxes for holding tray holder, microplates, covers or lids for covering microplates petri dishes or covers or lids for petri dishes.

8. The method according to any of the previous claims, wherein the movement in step c) is selected from a translational movement on or across the top surface of the first component, a circular movement in the x-y plane or a rotational movement around the z-axis.

9. The method according to any of the previous claims, wherein the center of the top surface of the first component (C') is misaligned with respect to the center of the bottom surface of the second component (C) when executing step a).

10. The method according to claim 9, wherein the center of the top surface of the first component is misaligned with respect to the center of the bottom surface of the second component by a distance equal to at least 0.5% of the longest dimension of the first component.

11. The method according to any of the previous claims, wherein the gripper (9) has two gripping fingers (11) for applying a gripping force onto the outer surface of the rim (7) of the second component and wherein the gripper provides a first force in the z-direction for biasing the second component in the z-direction in step b).

12. The method according to claim 11 wherein the first force applied in the z-direction by the gripper is decreased to a second force below the first force during step c).

13. The method according to claims 11 or 12, wherein the gripping fingers contacting the outer surface of the second component slide over the outer surface of the rim during step b) until the gripping fingers contact the top surface of the first component.

14. The method according to any of the previous claims further comprising step d); releasing the gripper.

15. The method according to claim 13 wherein steps a) to d) are repeated for stacking first and second components.
